# FASCICULE DE BREVET EUROPEEN

(11) **EP 1 417 082 B1**
(45) Date de publication et mention de la délivrance du brevet: **27.06.2007**
(21) Numéro de dépôt: 02794561.7
(22) Date de dépôt: 06.08.2002
(51) Int. Cl.: B29C 33/44, B29C 45/40

(54) **MOULE POUR BANDE DE ROULEMENT DE PNEUMATIQUE**
FORM FÜR REIFENLAUFFLÄCHE
MOULD FOR TYRE RUNNING TREAD

(30) Priorité: 07.08.2001 FR 0110569
(43) Date de publication de la demande: 12.05.2004
(73) Titulaire: Société de Technologie Michelin, 63000 Clermont-Ferrand (FR); MICHELIN Recherche et Technique S.A., 1763 Granges-Paccot (CH)
(72) Inventeur: MENARD, Gilbert, F-63530 Volvic (FR)
(74) Mandataire: Le Cam, Stéphane Georges Elie
(86) Numéro de dépôt international: PCT/EP2002/008759
(87) Numéro de publication internationale: WO 2003/013819

(56) Documents cités:
- EP-A- 0 807 507
- FR-A- 1 524 052
- US-A- 4 076 483
- PATENT ABSTRACTS OF JAPAN vol. 17, no. 469 (M-1469), 26 août 1993 (1993-08-26) -& JP 05 111921 A (BRIDGESTONE CORP), 7 mai 1993 (1993-05-07) cité dans la demande

## Description

L'invention concerne un moule pour bandes de roulement de pneumatiques, ces bandes de roulement pouvant être destinées indifféremment au chapage de pneumatiques neufs ou au rechapage.

On entendra dans ce qui suit par surface « intérieure » d'une bande de roulement la surface de la bande de roulement destinée à être déposée sur le pneumatique et donc orientée vers l'intérieur par rapport au centre du pneumatique et par surface « extérieure » la surface destinée à être au contact du sol lorsque la bande de roulement est déposée sur le pneumatique et donc orientée vers l'extérieur par rapport au centre du pneumatique.

L'invention concerne plus particulièrement un appareil utilisant un moule plat comprenant une première partie moulante inférieure et une deuxième partie moulante supérieure définissant chacune respectivement la surface extérieure ou la surface intérieure de la bande de roulement, l'une au moins de ces parties moulantes étant déplaçable entre deux positions correspondant à l'ouverture et à la fermeture du moule.

Aujourd'hui, l'homme de l'art a acquis une bonne maîtrise des mécaniques et cinématiques d'ouverture et de fermeture des moules permettant d'assurer un moulage et une vulcanisation corrects d'une bande de roulement. Cependant, on ne sait pas aujourd'hui démouler simultanément la bande de roulement sur toute la longueur mais seulement progressivement. Ainsi l'opération de démoulage de la bande de roulement reste délicate, voire même devient de plus en plus délicate du fait de la complexité croissante des sculptures réalisées sur les bandes de roulement.

En effet, à l'ouverture du moule, la bande de roulement demeure dans la partie moulante inférieure qui est généralement la partie définissant le moulage de sa surface extérieure et pour réaliser le démoulage, une grande difficulté rencontrée consiste en la réalisation d'un « amorçage » du décollage de la bande de roulement, c'est-à-dire le démoulage d'une des extrémités dans la direction longitudinale de la bande. La délicatesse de cette opération tient au fait qu'elle doit réaliser le démoulage complet de l'extrémité sans créer de défauts dus, par exemple, à un arrachement au niveau d'une sculpture et avec un minimum de contraintes sur la bande pour éviter des déformations de cette dernière.

De plus, on fait souvent appel aujourd'hui à des presses plates qui superposent alternativement des plateaux inférieurs et supérieurs afin d'avoir plusieurs moules pour un même encombrement au sol mais qui nécessairement offrent un espace d'ouverture des moules très limité. On cherche donc à ce que l'opération de démoulage soit susceptible de se faire dans un très faible encombrement.
Différentes solutions ont été proposées pour tenter de résoudre ces difficultés. Ainsi, par exemple, la publication JP 5-111921 décrit un moule pour bande de roulement comportant deux parties moulantes dans lequel la partie moulant la surface extérieure de la bande de roulement porte à l'une de ses extrémités longitudinales une section inclinée destinée à former à l'issue de la vulcanisation une protubérance par rapport à la bande de roulement. Cette protubérance est destinée à faciliter « l'accrochage » de l'extrémité pour réaliser le démoulage. Néanmoins, étant donné sa direction parallèle au moule et sa minceur, la prise de cette protubérance paraît délicate et en particulier si l'effort de traction nécessaire au démoulage de la bande doit être important, par exemple pour des bandes de roulement pour poids lourds.

L'invention vise à pallier l'ensemble de ces inconvénients.

Selon l'invention, le moule pour bande de roulement de pneumatique comprenant une partie moulante inférieure et une partie moulante supérieure définissant respectivement la surface extérieure ou la surface intérieure d'une bande de roulement, l'une au moins des parties étant déplaçable entre deux positions correspondant à l'ouverture et à la fermeture du moule, est tel que la partie moulante supérieure porte des éléments d'accrochage d'une des extrémités longitudinales de la bande de roulement, lesdits élément d'accrochage faisant saillie par rapport à la surface de moulage de la partie moulante supérieure.

Cette réalisation permet d'assurer le démoulage d'une extrémité longitudinale de la bande de roulement par l'ancrage de ladite extrémité dans la partie moulante supérieure de façon efficace dans l'espace imparti par l'ouverture du moule elle-même et sans nécessiter d'intervention extérieure.

L'invention concerne également un appareil de moulage et de vulcanisation qui comprend un moule tel que décrit précédemment et des moyens de démoulage progressifs de la bande de roulement.

Avantageusement, les moyens de démoulage progressifs sont constitués par l'extrémité d'un plateau translatable sur la partie moulante inférieure dans la direction longitudinale.

Cet appareil permet effectivement avec les moyens progressifs de démoulage qui coopèrent avec la zone d'accrochage du moule de parvenir, en utilisant l'accès à la bande de roulement créé par l'amorçage du démoulage, à démouler le reste de la bande de roulement en respectant les contraintes d'espace et d'effort supportées par la bande. De plus, ce plateau permet de procéder à la fois au démoulage de la bande de roulement et à son évacuation.

D'autres avantages et caractéristiques de l'invention apparaîtront à la lecture d'un exemple de réalisation d'un appareil de moulage et de vulcanisation pour bande de roulement conforme à l'invention en référence au dessin dans lequel :
- la figure 1 est une représentation perspective partielle d'un conforme à l'invention moule en position d'ouverture,
- la figure 2 est une coupe longitudinale partielle méridienne du moule représenté sur la figure 1,
- la figure 3 est une représentation perspective partielle de la partie inférieure du moule représenté sur la figure 1 selon une variante de réalisation,
- la figure 4 est une coupe longitudinale partielle du moule selon la ligne IV de la figure 3 en position de fermeture du moule,
- la figure 5 est une coupe longitudinale partielle du moule selon la ligne V de a figure 3 en position de fermeture du moule,
- la figure 6A à 6D sont des représentations schématiques partielles en coupe longitudinale de l'appareil, illustrant le fonctionnement de ce dernier lors de l'opération de démoulage.

Dans ce qui suit, les mêmes références désigneront les éléments identiques des figures représentant des variantes de l'invention.

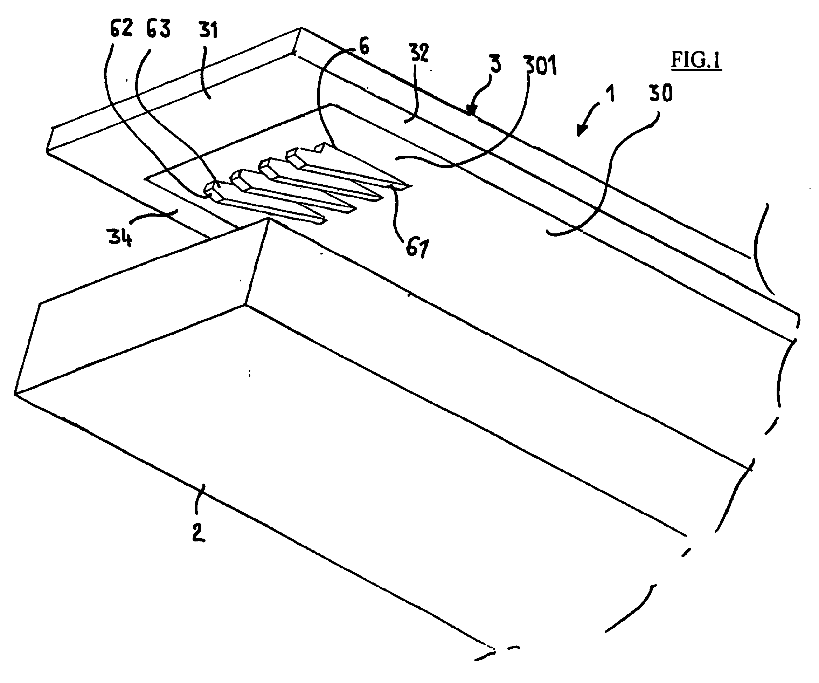

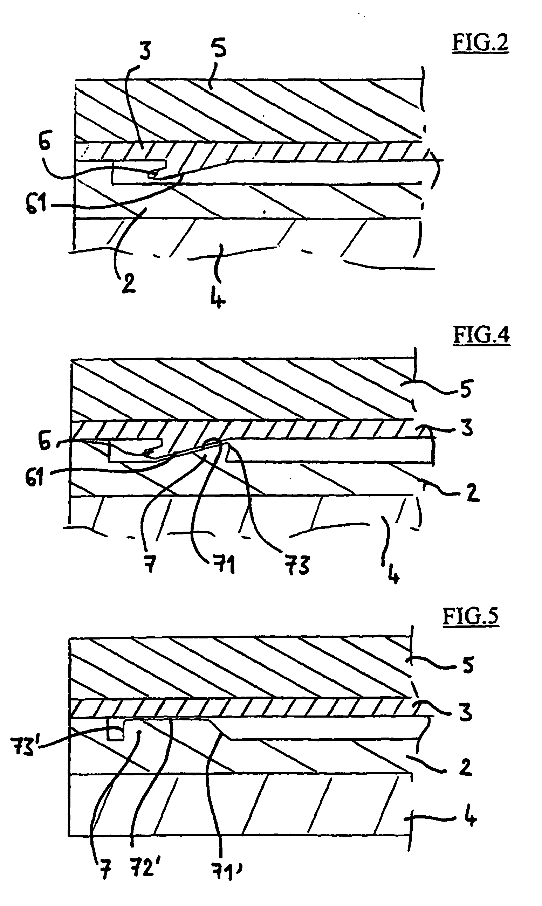

Selon les figures 1 et 2, le moule 1 comprend une première et une deuxième parties moulantes 2 et 3 respectivement solidarisées à un plateau de presse inférieur 4 et à un plateau de presse supérieur 5. La première partie moulante inférieure 2 définit la surface extérieure de la bande de roulement alors que la deuxième partie moulante 3 définit la surface inférieure de la bande de roulement.

La forme de l'espace de moulage représenté sur la figure 1 correspond au moulage d'une bande de roulement ayant des bords latéraux sans « ailes » latérales. Cependant ces formes de moulage sont données à titre d'exemple et ne sauraient constituer une limitation de l'invention ; l'invention pouvant, en effet, s'appliquer indifféremment au moulage de bandes de roulements ayant des bords longitudinaux avec ou sans « ailes » latérales et quelle que soit la forme de ces dernières.

Des moyens classiques non représentés, tels que des systèmes vis-écrou, permettant de solidariser chaque partie moulante avec le plateau de presse correspondant, sont répartis régulièrement le long des parties moulantes afin d'assurer une bonne liaison entre lesdites parties moulantes et les plateaux.

De façon avantageuse, on peut réaliser chaque partie moulante sous forme de secteurs jointifs respectivement couplés au plateau correspondant.

Le plateau supérieur 5 est déplaçable par rapport au plateau inférieur 4 parallèlement à un plan transversal P1, c'est-à-dire verticalement sur les figures 1 et 2, afin de permettre l'ouverture et la fermeture du moule par le déplacement de la partie moulante supérieure 3, ainsi que d'atteindre des positions intermédiaires. Pour obtenir le mouvement du plateau supérieur 5, on utilise de façon classique tous moyens appropriés tels que des vérins mécaniques, hydrauliques ou pneumatiques.

Il apparaîtra clairement à la lecture de la suite de la description qu'on peut prévoir indifféremment une mouvement relatif de la partie moulante inférieure par rapport à la partie moulante supérieure sans modifier l'agencement ou le principe de fonctionnement de l'invention.

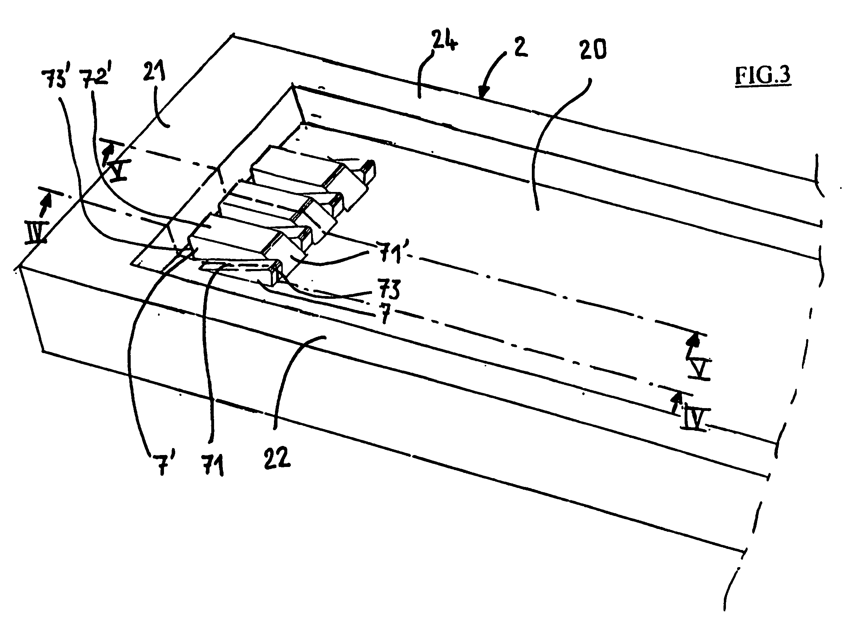

La partie moulante inférieure 2 possède une surface 20 orientée vers l'intérieur du moule, de moulage de la surface extérieure de la bande de roulement, qui porte les éléments moulants destinés à réaliser les sculptures de la bande de roulement désirées, tels que des lamelles, cordons etc... Cette surface 20 est entourée de bords élevés, c'est-à-dire orientés vers la partie moulante supérieure 3, de contact avec ladite partie supérieure 3. On nommera dans ce qui suit bords longitudinaux 21, les bords de la partie moulante 2 orientés selon la longueur du moule et bords transversaux 22 et 24, ceux orientés selon la largeur du moule, comme on le voit sur la figure 3. Il est important que le bord 21 soit élevé pour assurer lors de l'ouverture du moule le maintien de l'extrémité longitudinale de la bande de roulement sur la partie moulante supérieure comme on le reverra en détails dans la suite de la description. La hauteur des autres bords est plus généralement liée aux connaissances de l'homme du métier pour la réalisation de moules plats pour respecter la reprise des efforts de pressage et d'étanchéité des bords de moule.

La partie moulante supérieure 3 porte une surface 30, orientée vers l'intérieur du moule, de moulage de la surface intérieure de la bande de roulement entourés de bords longitudinaux 31 et transversaux 32 et 34. Ces bords ne dépassent pas par rapport à la surface 30 dans l'exemple représenté ici, cependant on peut tout à fait envisager qu'ils possèdent une certaine hauteur conformément à ce qui a été dit précédemment pour les bords de la partie moulante supérieure.

La surface 30 porte à l'une de ses extrémités 301 au moins un élément en saillie 6 en forme de crochet dont l'extrémité libre 63 est orientée vers l'extérieur du moule dans la direction longitudinale.

Avantageusement si on prévoit un seul crochet 6, on préférera le positionner transversalement au milieu de la largeur du moule. Ce crochet peut s'étendre sur toute ou partie de la largeur du moule mais on peut également envisager plusieurs crochets 6 espacés sur cette largeur tels que représenté dans l'exemple décrit et représenté sur la figure 1. Le choix de plusieurs crochets est particulièrement intéressant car il se crée lors du moulage et de la vulcanisation de la bande des ponts de gomme entre les crochets qui à la fin de la phase de démoulage vont augmenter la rigidité de la zone de gomme prise dans les crochets et ainsi faciliter son extraction finale.

Les crochets 6 représentés étant identiques, on décrira dans ce qui suit en détails un seul crochet en référence à la figure 2.

L'extrémité opposée à l'extrémité libre 63 du crochet 6 par rapport au centre dudit crochet, est constituée par une surface inclinée 61. L'inclinaison de cette surface a pour objet de faciliter le « décrochage » de la bande de roulement du crochet et d'éviter, en particulier, que lors de cette opération une partie de la bande de roulement déjà démoulée n'entre en contact avec le crochet et risque de provoquer des défauts ou des déformations sur la bande.

Dans cette variante de réalisation du moule, la surface inclinée 61 définit le moulage de l'extrémité longitudinale de la bande de roulement, ce qui peut être différent comme on le verra dans ce qui suit. Cependant dans tous les cas, la zone de la bande de roulement formée dans la longueur du moule entre cette surface inclinée 61 et le bord transversal 21 de la partie moulante inférieure étant destinée à être chutée, en effet cette zone sert à réaliser l'accrochage et l'amorçage du démoulage.

On peut également prévoir comme le montre la figure 2, une forme pointue pour l'extrémité 63 libre afin là aussi de faciliter ensuite le démoulage par rapport aux crochets.

En position fermée du moule, le crochet 6 se trouve dans l'espace de moulage, la surface 62 du crochet 6 orientée vers l'intérieur du moule n'étant pas au contact de la surface 21 de la partie moulante inférieure 2.

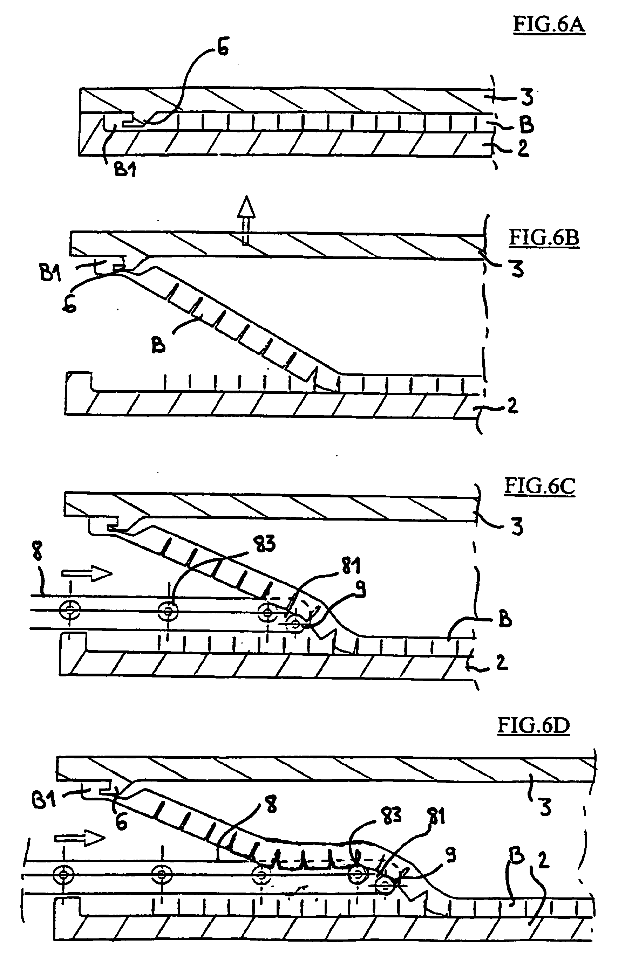

On peut, selon des variantes de réalisation de l'invention représentées sur les figures 3 et 4, envisager la présence d'éléments en saillie sur la partie moulante inférieure 2 en vis-à-vis des crochets 6 afin de coopérer avec ces derniers pour procurer différents avantages. Ainsi, on peut prévoir comme le montre la figure 4 des crochets ou dents 7 sur la partie moulante inférieure 2 orientées de sorte que leur extrémité libre 73 soit dirigée vers l'extérieur du moule dans la direction longitudinale, et possédant une surface inclinée 71 destinée à coopérer avec la surface inclinée 61 de sorte à ce que ces deux surfaces délimitent entre elles un espace de formation d'une languette . Dans une telle réalisation, la languette peut permettre d'accepter les déformations d'allongement que risquent d'entraîner le démoulage. De plus, cette forme paraît particulièrement intéressante dans le cas d'une réalisation où la partie moulante supérieure 3 porte également des éléments de moulage ; en effet, il est utile alors que l'extrémité 73 retiennent la gomme légèrement lors de l'ouverture du moule permettant ainsi de forcer un démoulage correct des sculptures portées par la surface 30 de la partie moulante supérieure 3.

La figure 3 montre également une deuxième variante pouvant être utilisées en même temps que les dents 7 comme sur cette figure, ou séparément. Dans cette variante qui apparaît clairement sur la coupe de la figure 5, la partie moulante inférieure 2 comporte des éléments en saillie 7' disposés de sorte à s'intercaler aux crochets 6 et qui présentent une surface plane 72' et une surface inclinée 71' vers l'intérieur du moule et une surface opposée 73' qui délimité avec le bord élevé 21 de la partie moulante inférieure un espace de moulage d'une longueur, dans la direction longitudinale, inférieure à celui délimitée entre l'extrémité libre 63 du crochet 6 et ledit bord 21. Cette surface 73' permet de créer sur la bande de roulement un bord « d'attaque » sur lequel un levier pourra exercer une poussée afin de faciliter l'opération d'extraction de la bande du crochet 6 en fin de démoulage.

On peut également envisager l'ajout d'un élément coupe-gomme aux fins de faciliter l'ébarbage nécessaire.

Par ailleurs afin de réaliser la suite de l'opération de démoulage, l'appareil comprend des moyens de démoulage progressif de la bande de roulement.

Ainsi, comme le montrent les figures 6C et 6D, l'appareil comporte un sabot 81 destiné à réaliser localement et progressivement le démoulage de la bande de roulement une fois l'extrémité longitudinale de celle-ci démoulée.

Le sabot 81 est constitué par l'extrémité d'un plateau mobile 8 déplaçable longitudinalement parallèlement aux parties moulantes. En particulier, des rouleaux, non représentés, disposés aux extrémités transversales du plateau peuvent permettre de translater sur la partie moulante inférieure en roulant sur les bords longitudinaux 22 et 24 de ladite partie. Ces rouleaux peuvent être réalisés sous forme de galets ou s'étendre sur toute la largeur du plateau 8 dans un souci de simplicité de réalisation.

Le plateau 8 peut être constitué de plusieurs tronçons successifs permettant une certaine souplesse à l'ensemble ou d'une seule table plus rigide, le plateau comprenant dans tous les cas des montants s'étendant dans la direction longitudinale sur lesquels sont montés libres en rotation des rouleaux 83 de réception de la bande de roulement. Comme on le verra plus précisément dans la description du fonctionnement de l'appareil, les rouleaux 83 servent de support lors du démoulage pour faciliter cette opération et également de transport pour la bande de roulement à l'issue du démoulage.

L'extrémité 81 porte au moins un rouleau 9 qui par sa rotation associé à l'avance du plateau entraîne le démoulage progressif de la bande de roulement. On peut envisager que l'extrémité 81 soit réalisée sous forme d'une pelle dont l'extrémité mince et l'inclinaison permettrait d'obtenir également le décollement progressif de la bande du moule.

Selon une variante non représentée, on peut envisager la présence solidarisée ou non au plateau 8 d'un levier basculant qui permettrait en présence d'un moule tel que représenté sur la figure 5, d'exercer une poussée sur la surface de la bande de roulement définie par la surface 73' de l'élément 7' pour faciliter l'extraction hors du crochet, de la bande de roulement en fin de démoulage.

Dans ce qui suit, on décrira succinctement l'opération de démoulage d'une bande de roulement B en référence aux figures 6A à 6D qui représentent la variante de l'appareil correspondant à la figure 1, le fonctionnement correspondant aux autres variantes de réalisation du moule pouvant à l'aide des éléments de description précédents se déduire de ce qui suit.

Les figures 6A à 6D sont des coupes dans la direction longitudinale sur lesquelles seule une extrémité longitudinale de l'appareil de moulage et de vulcanisation est représentée, qui correspond à l'extrémité de la partie moulante supérieure portant des crochets 6. On ne décrira ici ce qui se passe pour un crochet 6.

Le moule représenté sur la figure 6A est en position fermée, les bords longitudinaux et transversaux de la partie moulante inférieure 2 étant au contact de la partie moulante supérieure 3 comme on peut le voir pour le bord transversal 21 représenté ici. La bande de roulement B occupe tout l'espace de moulage, son extrémité B 1 étant moulée autour du crochet 6.

Grâce aux moyens mécaniques, hydrauliques ou pneumatiques évoqués précédemment, on procède à l'ouverture du moule 1 en translatant verticalement la partie supérieure moulante 3.

Comme on le voit sur la figure 6B, la bande de roulement B est entraînée par son extrémité B1 engagée dans le crochet 6, à suivre le déplacement de la partie moulante 3, ce qui entraîne son décollement de 1 partie moulante inférieure 2.

L'effort exercée sur l'extrémité B 1 par l'intermédiaire du crochet 6 a entraîné cette dernière dont le déplacement a été guidé par contact glissant avec le bord 21 de la partie moulant inférieure 2. Ce contact avec le bord 21 permet d'éviter que la traction exercée sur la bande de roulement et plus précisément sur l'extrémité B 1 lors de l'ouverture du moule, n'entraîne une rotation de ladite extrémité de sorte de se dégager du crochet 6.

Comme le montre la figure 6B, l'accrochage de l'extrémité B1 de la bande de roulement à la partie supérieure moulante 3 lors de l'ouverture du moule, crée un espace de dégagement qui autorise l'accès d'un autre type de moyens de démoulage entre la bande et la partie moulante inférieure 2.

On fait ainsi appel au plateau 8 que l'on translate parallèlement à la partie moulante inférieure 2 sur les bords 22 et 24 de la partie moulante inférieure 2, jusqu'au contact entre le rouleau 9 libre en rotation et la bande de roulement.

La libre rotation du rouleau 9 associée à l'avancée du plateau 8 suffit alors pour localement réaliser le démoulage de la bande de roulement, comme on le voit sur la figure 6C, et ainsi progressivement de toute la bande de roulement.

La bande de roulement B repose au cours de ce démoulage naturellement sur le plateau 8, ce qui ne nuit cependant pas à l'avancée du plateau grâce aux rouleaux 83 sur lesquels la bande se translate longitudinalement, comme on le voit sur la figure 6D.

Lorsque le plateau 8 a permis le démoulage complet de la bande de roulement B, cette dernière repose donc sur les rouleaux 83 à l'exception de son extrémité B1 toujours en prise avec le crochet 6. Pour réaliser l'extraction de l'extrémité B1, une marche arrière du plateau est suffisante, particulièrement lorsque comme dans l'exemple décrit ici, il existe plusieurs crochets 6 espacés entre eux qui ont créés dans leurs interstices des zones plus rigides facilitant cette opération.

Comme on l'a évoqué précédemment dans le cas de sculptures plus complexes la présence d'éléments de démoulage 7' peut être intéressante pour prévoir un levier venant basculer au contact de la bande de roulement et ajoutant son action par poussée sur l'extrémité B1 au recul du plateau 8 pour dégager ladite B1. On peut également réaliser une marche avant du plateau 8 qui viendrait forcer le basculement de l'extrémité B1 autour des crochets 6 bien que cette solution risque d'apporter des déformations supplémentaires sur la bande de roulement.

Sans sortir du cadre de l'invention, on pourrait également envisager un dispositif mécanique permettant de faciliter le dégagement hors des crochets 6 tel que, par exemple, les crochets 6 montés basculants vers le centre du moule autour d'axes portés par la partie moulante supérieure 3.

A l'issue de l'opération de démoulage, la bande de roulement B repose sur le plateau 8 qui peut alors également servir de transport à la bande pour quitter l'espace entre les parties moulantes supérieure 3 et inférieure 2 du moule.

## Revendications

1. Moule pour bande de roulement de pneumatique comprenant une partie moulante inférieure (2) et une partie moulante supérieure (3) définissant respectivement la surface extérieure ou la surface intérieure d'une bande de roulement, l'une au moins des parties étant déplaçable entre deux positions correspondant à l'ouverture et à la fermeture du moule (1), dans lequel la partie moulante supérieure (3) porte des éléments d'accrochage (6) d'une des extrémités longitudinales de la bande de roulement et dans lequel les éléments d'accrochage font saillie par rapport à la surface (30) de moulage de la partie moulante supérieure (3).

2. Moule selon la revendication 1, dans lequel les éléments d'accrochage sont constitués par au moins un crochet (6).

3. Moule selon la revendication 2, dans lequel le crochet (6) s'étend transversalement sur au moins une partie de la largeur de la partie moulante supérieure (3).

4. Moule selon la revendication 2, dans lequel les éléments en saillie comprennent plusieurs crochets (6) espacés dans la direction transversale.

5. Moule selon l'une quelconque des revendications 2 à 4, dans lequel le crochet (6) porte une extrémité libre (63) orientée longitudinalement vers l'extérieur du moule.

6. Moule selon l'une quelconque des revendications 2 à 5, dans lequel le crochet (6) porte une extrémité libre (63) pointue.

7. Moule selon l'une quelconque des revendications 5 ou 6, dans lequel le crochet (6) porte une surface inclinée (61) opposée à son extrémité libre (63), destinée à faciliter l'escamotage dudit crochet (6).

8. Moule selon l'une quelconque des revendications 1 à 7, dans lequel la partie moulante inférieure (2) porte au moins un bord transversal (21) élevé coopérant avec les éléments d'accrochage (6) portés par la partie moulante supérieure.

9. Moule selon l'une quelconque des revendications 1 à 8, dans lequel la partie moulante inférieure (2) porte des éléments en saillie (7, 7') destinés à coopérer avec les éléments (6) portés par la partie supérieure moulante (3).

10. Moule selon la revendication 9, dans lequel les éléments en saillie (7, 7') de la partie moulante inférieure (2) sont constitués au moins par un crochet (7) dont l'extrémité libre (73) est orientée longitudinalement vers l'intérieur du moule (1).

11. Moule selon l'une quelconque des revendications 9 ou 10, dans lequel les éléments en saillie (7, 7') de la partie inférieure du moule (2) comprennent une surface (73') de moulage d'un bord d'attaque sur la bande de roulement destinée à faciliter le décrochage hors des éléments d'accrochage (6) de la partie moulante supérieure (3).

12. Appareil de moulage et de vulcanisation de bandes de roulement de pneumatiques comprenant un moule selon l'une quelconque des revendications 1 à 10, qui comprend des moyens de démoulage progressifs (8) de la bande de roulement.

13. Appareil selon la revendication 12, dans lequel les moyens de démoulage progressif sont constitués par l'extrémité (81) d'un plateau (8) translatable sur la partie moulante inférieure (2) dans la direction longitudinale.

14. Appareil selon la revendication 13, dans lequel l'extrémité (81) du plateau (8) comprend au moins un rouleau (9) s'étendant dans la direction transversale, monté libre en rotation.

15. Appareil selon la revendication 13, dans lequel l'extrémité (81) du plateau (8) est constituée sous forme d'une pelle.

16. Appareil selon l'une quelconque des revendications 13 à 15, dans lequel le plateau (8) comprend des rouleaux (83) s'étendant dans la direction transversale de support de la bande de roulement, lesdits rouleaux étant libres en rotation.

17. Appareil selon l'une quelconque des revendications 13 à 16, dans lequel le plateau (8) est monté translatable par rapport à la partie moulante inférieure (2) par l'intermédiaire de rouleaux s'étendant dans la direction transversale montés libres en rotation qui coopèrent avec les bords longitudinaux (22, 24) de ladite partie moulante inférieure (2).

## Claims

1. A tyre tread mould comprising a lower moulding part (2) and an upper moulding part (3) defining respectively the outer surface or the inner surface of a tread, one at least of the parts being movable between two positions corresponding to the opening and closure of the mould (1), in which the upper moulding part (3) bears elements (6) for hooking one of the longitudinal ends of the tread and in which the hooking elements protrude relative to the moulding surface (30) of the upper moulding part (3).

2. A mould according to Claim 1, in which the hooking elements are formed by at least one hook (6).

3. A mould according to Claim 2, in which the hook (6) extends transversely over at least part of the width of the upper moulding part (3).

4. A mould according to Claim 2, in which the protruding elements comprise several hooks (6) spaced in the transverse direction.

5. A mould according to any one of Claims 2 to 4, in which the hook (6) bears a free end (63) oriented longitudinally towards the outside of the mould.

6. A mould according to any one of Claims 2 to 5, in which the hook (6) bears a pointed free end (63).

7. A mould according to any one of Claims 5 or 6, in which the hook (6) bears an inclined surface (61) opposite its free end (63), intended to facilitate the retraction of said hook (6).

8. A mould according to any one of Claims 1 to 7, in which the lower moulding part (2) bears at least one raised transverse edge (21) which cooperates with the hooking elements (6) borne by the upper moulding part.

9. A mould according to any one of Claims 1 to 8, in which the lower moulding part (2) bears protruding elements (7, 7') intended to cooperate with the elements (6) borne by the upper moulding part (3).

10. A mould according to Claim 9, in which the protruding elements (7, 7') of the lower moulding part (2) are formed at least by a hook (7) the free end (73) of which is oriented longitudinally towards the inside of the mould (1).

11. A mould according to any one of Claims 9 or 10, in which the protruding elements (7, 7') of the lower part of the mould (2) comprise a moulding surface (73') for a leading edge on the tread intended to facilitate the unhooking from the hooking elements (6) of the upper moulding part (3).

12. A moulding and vulcanisation apparatus for tyre treads comprising a mould according to any one of Claims 1 to 10, which comprises progressive demoulding means (8) for the tread.

13. Apparatus according to Claim 12, in which the progressive demoulding means are formed by the end (81) of a plate (8) which can be translated on the lower moulding part (2) in the longitudinal direction.

14. An apparatus according to Claim 13, in which the end (81) of the plate (8) comprises at least one roller (9) extending in the transverse direction, mounted freely in rotation.

15. Apparatus according to Claim 13, in which the end (81) of the plate (8) is in the form of a shovel.

16. Apparatus according to any one of Claims 13 to 15, in which the plate (8) comprises rollers (83) extending in the transverse direction of support of the tread, said rollers being free in rotation.

17. An apparatus according to any one of Claims 13 to 16, in which the plate (8) is mounted to be translatable relative to the lower moulding part (2) by means of rollers extending in the transverse direction which are mounted freely in rotation which cooperate with the longitudinal edges (22, 24) of said lower moulding part (2).

## Patentansprüche

1. Form für Reifenlauffläche, die einen unteren formenden Teil (2) und einen oberen formenden Teil (3) aufweist, die jeweils die Außenfläche oder die Innenfläche einer Lauffläche definieren, wobei mindestens einer der Teile zwischen zwei Positionen verschiebbar ist, die dem Öffnen und dem Schließen der Form (1) entsprechen, wobei der obere formende Teil (3) Aufhängelemente (6) eines der Längsenden der Lauffläche aufweist, und bei der die Aufhängelemente in Bezug auf die Fläche (30) zum Formen des oberen formenden Teils (3) vorstehen.

2. Form nach Anspruch 1, bei der die Aufhängelemente aus mindestens einem Haken (6) bestehen.

3. Form nach Anspruch 2, bei dem sich der Haken (6) quer auf mindestens einem Teil der Breite des oberen formenden Teils (3) erstreckt.

4. Form nach Anspruch 2, bei dem die vorstehenden Elemente mehrere Haken (6) in Querrichtung beabstandet aufweisen.

5. Form nach einem der Ansprüche 2 bis 4, bei der der Haken (6) ein freies Ende (63) trägt, das längs aus der Form nach außen ausgerichtet ist.

6. Form nach einem der Ansprüche 2 bis 5, bei der der Haken (6) ein spitzes freies Ende (63) trägt.

7. Form nach einem der Ansprüche 5 oder 6, bei der der Haken (6) eine schräge Fläche (61) seinem freien Ende (63) entgegengesetzt trägt, die dazu bestimmt ist, das Rückziehen des Hakens (6) zu erleichtern.

8. Form nach einem der Ansprüche 1 bis 7, bei der der untere formende Teil (2) mindestens einen erhöhten Querrand (21) trägt, der mit den Aufhängelementen (6) zusammenwirkt, die von dem unteren formenden Teil getragen werden.

9. Form nach einem der Ansprüche 1 bis 8, bei der der untere formende Teil (2) vorspringende Elemente (7, 7') trägt, die dazu bestimmt sind, mit den Elementen (6) zusammenzuwirken, die von dem oberen formenden Teil (3) getragen werden.

10. Form nach Anspruch 9, bei der die vorstehenden Elemente (7, 7') des unteren formenden Teils (2) aus mindestens einem Haken (7) bestehen, dessen freies Ende (73) längs zum Inneren der Form (1) ausgerichtet ist.

11. Form nach einem der Ansprüche 9 oder 10, bei der die vorstehenden Elemente (7, 7') des unteren Teils der Form (2) eine Fläche (73') zum Formen eines Angriffsrands auf der Lauffläche aufweisen, die dazu bestimmt ist, das Abhängen aus den Aufhängelementen (6) des oberen formenden Teils (3) zu erleichtern.

12. Form- und Vulkanisierungsgerät für Reifenlaufflächen, das eine Form gemäß einem der Ansprüche 1 bis 10 aufweist, die Mittel zum allmählichen Abformen (8) der Lauffläche aufweist.

13. Gerät nach Anspruch 12, bei dem die Mittel zum allmählichen Abformen aus dem Ende (81) einer Platte (8) bestehen, die auf dem unteren formenden Teil (2) in Längsrichtung verschiebbar ist.

14. Gerät nach Anspruch 13, bei dem das Ende (81) der Platte (8) mindestens eine Rolle (9) aufweist, die sich in Querrichtung frei in Drehung montiert erstreckt.

15. Gerät nach Anspruch 13, bei dem das Ende (81) der Platte (8) aus einer Schaufel besteht.

16. Gerät nach einem der Ansprüche 13 bis 15, bei dem die Platte (8) Rollen (83) aufweist, die sich in die Quertragrichtung der Lauffläche erstrecken, wobei die Rollen in Drehung frei sind.

17. Gerät nach einem der Ansprüche 13 bis 16, bei dem die Platte (8) in Bezug auf den unteren formenden Teil (2) über Rollen verschiebbar installiert ist, die sich in die Querrichtung erstrecken und in Drehung frei installiert sind, die mit den Längsrändern (22, 24) des unteren formenden Teils (2) zusammenarbeiten.
